# EUROPÄISCHE PATENTSCHRIFT

(11) **EP 2 027 458 B1**
(45) Veröffentlichungstag und Bekanntmachung des Hinweises auf die Patenterteilung: **06.07.2011**
(21) Anmeldenummer: 07722373.3
(22) Anmeldetag: 08.05.2007
(51) Int. Cl.: G01N 27/12

(54) **VERFAHREN UND EINRICHTUNG ZUM BETREIBEN EINES MOX-GAS-SENSORS**
METHOD AND DEVICE FOR THE OPERATION OF AN MOX GAS SENSOR
PROCÉDÉ ET DISPOSITIF POUR FAIRE FONCTIONNER UN CAPTEUR DE GAZ DE COMBUSTIBLE MOX

(30) Priorität: 29.05.2006 DE 102006025249
(43) Veröffentlichungstag der Anmeldung: 25.02.2009
(73) Patentinhaber: EADS Deutschland GmbH, 85521 Ottobrunn (DE)
(72) Erfinder: BECKER, Thomas, 85521 Ottobrunn (DE); SAYHAN, Ilker, 80339 München (DE); SABATER, Jordi, 81667 München (DE)
(86) Internationale Anmeldenummer: PCT/DE2007/000819
(87) Internationale Veröffentlichungsnummer: WO 2007/137549

(56) Entgegenhaltungen:
- WO-A1-98/52036
- DE-A1- 3 123 403
- US-A- 5 517 182
- US-A- 5 898 101
- US-A1- 2003 037 593
- US-A1- 2005 022 581

## Beschreibung

Die Erfindung betrifft einen MOX-Gas-Sensor.

MOX-Gas-Sensoren dienen zur Messung von in der Umgebung des Sensors vorhandenen Gaskonzentrationen. Die Funktion des MOX-Sensors beruht auf einer Auswertung von Widerstand oder Leitfähigkeit einer metalloxidischen Schicht (MOX), die auf einem Substrat vorgesehen ist, welches beheizbar ist. Herkömmlicherweise werden solche MOX-Sensoren kontinuierlich beheizt, was einen großen Energieaufwand erfordert. Dadurch ist es nicht möglich, MOX-Sensoren in batteriebetriebenen Systemen vorzusehen, deren Batterie eine nur kleine Kapazität aufweist.

Aus der US 2003/0037593 A1 ist ein beheizter MOX-Sensor zur Detektion von Ammoniak und/oder Ethen bekannt.

Gemäß der US 5 898 101 sind bei einem Gas-Sensor eine Anzahl von Sensoren, sowie ein Heizelement zum Beheizen derselben vorgesehen. Die Heizquelle wird mittels einer Batterie periodisch gepulst betrieben und während der Heizphasen ein Teil der Sensoren ausgelesen, wobei das Auslesen der Sensoren sofort oder kurz nach dem Beginn der Heizphase erfolgen kann.

Gemäß der DE 31 23 403 A1 soll der Sensor intervallmäßig periodisch getaktet mit abwechselnden Heizphasen und Ruhephasen beheizt werden, so dass der Wärmeverlust des Sensors während einer Ruhephase in der nachfolgenden Heizphase wieder ausgeglichen wird, und der Widerstand des Sensors soll während einer Meßphase gemessen werden, die innerhalb jeder Heizphase in deren Endbereich liegt.

Die US 2005/0022581 A1 beschreibt ein zur drahtlosen Abfrage vorgesehenes chemisches Sensorsystem, welches einen mit einer passiven Responderanordnung versehenen Sensor umfasst, wobei der Sensor durch ein drahtloses elektromagnetisches Abfragesignal eines Sendeempfängers mit Energie versorgt und das Signal des Sensors von der Responderanordnung zum Sendeempfänger übertragen wird.

Die Aufgabe der Erfindung ist es, einen verbesserten MOX-Gas-Sensor anzugeben, der in der Warenlogistik, wie beim Lebensmitteltransport oder beim Transport von anderen verderblichen Gütern oder in anderen Bereichen einsetzbar ist.

Diese Aufgabe wird durch einen MOX-Gas-Sensor mit den Merkmalen des Anspruchs 1 gelöst.

Vorteilhafte Ausführungsformen und Weiterbildungen der Erfindung sind in den Unteransprüchen angegeben.

Durch die Erfindung wird ein MOX-Gas-Sensor zur Messung einer in der Umgebung vorhandenen Gaskonzentration, mit einer elektrischen Stromquelle zum Beheizen des Gas-Sensors und mit einer Messanordnung zur Erfassung und Auswertung einer die Gaskonzentration repräsentierenden elektrischen Ausgangsgröße des Gas-Sensors, geschaffen, wobei der Sensor zum Messen von Ammoniak oder Ethen in der Umgebung des Gas-Sensors (1) vorgesehen ist. Erfindungsgemäß ist die elektrische Stromquelle in Form einer Batterie ausgebildet und zum diskontinuierlichen Beheizen des MOX-Sensors zu diskreten Messzeiten vorgesehen, die Messanordnung zum Erzeugen eines die Gaskonzentration repräsentierenden Messwerts aus der jeweils während der diskreten Messzeiten erfassten elektrischen Ausgangsgröße des Sensors vorgesehen, und die batteriebetriebene Einrichtung auf einem RFID-Tag ausgebildet.

Gemäß einer Ausführungsform ist die Einrichtung dazu vorgesehen, einen Mittelwert aus der während der diskreten Messzeiten erfassten elektrischen Ausgangsgröße zu erzeugen.

Gemäß einer anderen Ausführungsform ist die Einrichtung dazu vorgesehen, den die Gaskonzentration repräsentierenden Messwert aus der jeweils während Teilen der diskreten Messzeiten erfassten elektrischen Ausgangsgröße des MOX-Sensors zu erzeugen.

Die Einrichtung kann dazu vorgesehen sein, die elektrische Ausgangsgröße jeweils während Teilen der diskreten Messzeiten zu erfassen, während denen die elektrische Ausgangsgröße im wesentlichen konstant ist.

Die Einrichtung kann dazu vorgesehen sein, als elektrische Ausgangsgröße Widerstand oder Leitfähigkeit des MOX-Sensors zu erfassen.

Die Einrichtung kann dazu vorgesehen sein, als elektrische Ausgangsgröße Spannung oder Strom am MOX-Sensor zu erfassen.

Im Folgenden werden Ausführungsbeispiele der Erfindung anhand der Zeichnung erläutert.

Es zeigt:
- **Fig. 1**: ein vereinfachtes Blockschaltbild einer Einrichtung zum Betreiben eines MOX-Gas-Sensors gemäß einem Ausfüh- rungsbeispiel der Erfindung;
- **Fig. 2**: ein Diagramm, welches den Verlauf des am MOX-Sensor ge- messenen Widerstands bei kontinuierlichem Betrieb und bei Betrieb gemäß einem Ausführungsbeispiel der Erfindung zeigt;
- **Fig. 3a) und b)**: stark vergrößerte Darstellungen des in Fig. 2 durch einen Kreis kenntlich gemachten Bereichs der Messkurve für den Fall einer Messung von Ammoniak (Fig. 3a)) bzw. Ethen (Fig. 3b));

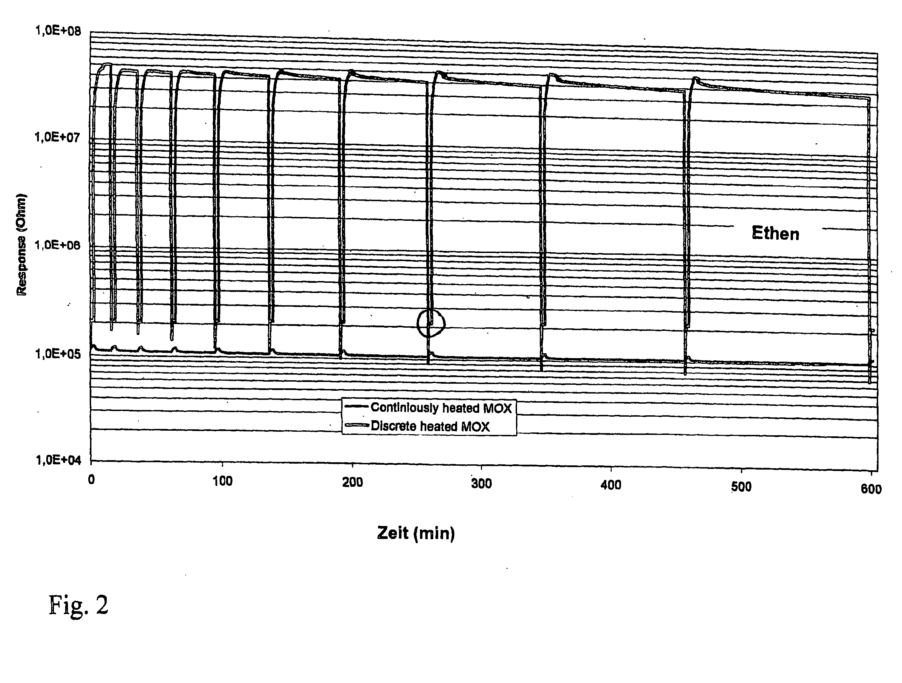

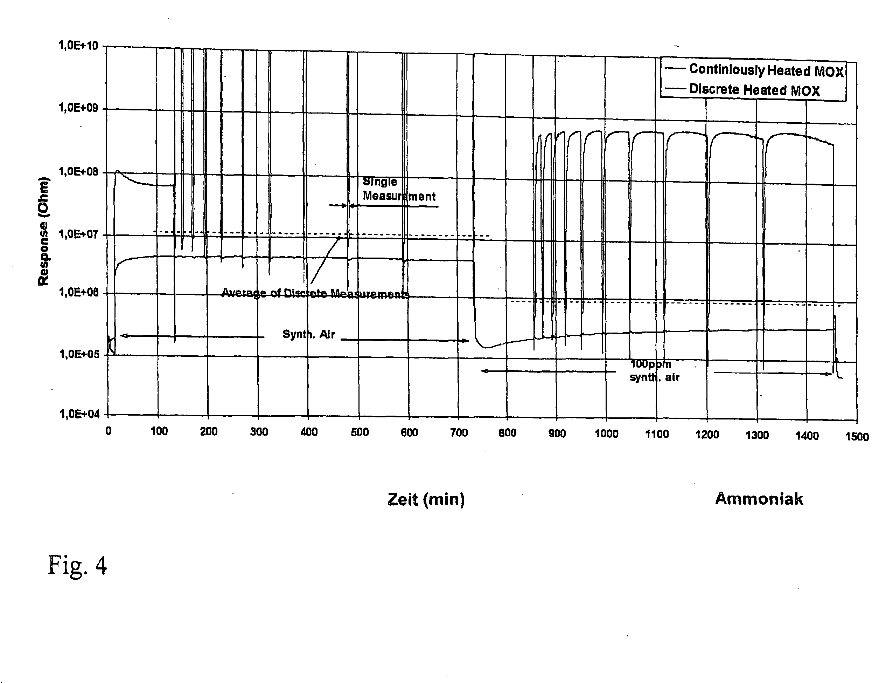

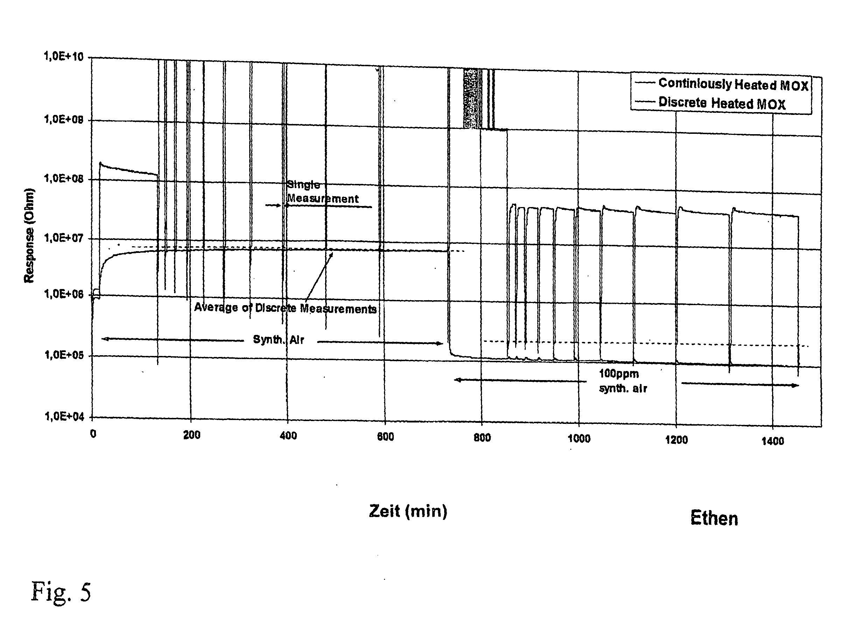

- **Fig. 4 und Fig. 5**: jeweils Diagramme ähnlich Fig. 2 für eine Messung von Am- moniak (Fig. 4) bzw. Ethen (Fig. 5) gemäß Ausführungsbei- spielen der Erfindung, wobei die im unteren Bereich darge- stellte durchgezogene Linie den Verlauf für einen in herkömm- licher Weise kontinuierlich beheizten MOX-Gas-Sensor und die im oberen Bereich gezeigte Linie die Messung mit einem diskontinuierlich zu diskreten Messzeiten beheizten MOX- Sensor zeigt und die gestrichelt dargestellten horizontal ver- laufenden Linien die jeweiligen Mittelwerte der diskreten Mes- sungen gemäß Ausführungsbeispielen der Erfindung darstel- len.

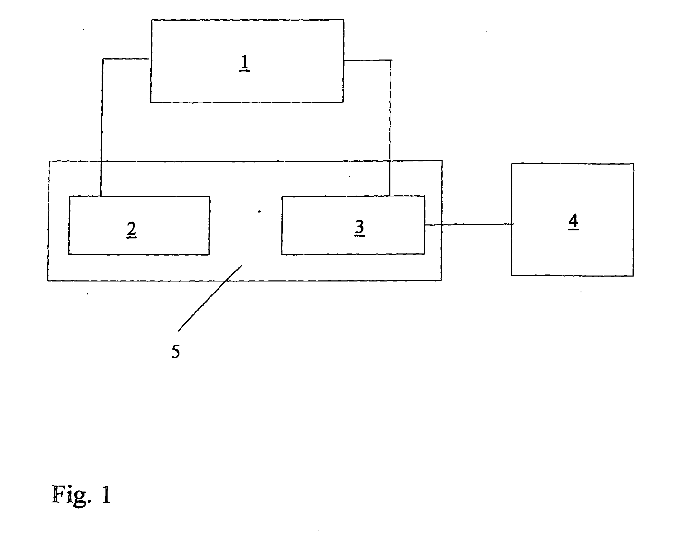

In Fig. 1 ist in Form eines vereinfachten Blockschaltbilds eine Einrichtung dargestellt, welche zum Betreiben eines MOX-Gas-Sensors 1 vorgesehen ist. Der MOX-Sensor 1 dient zur Messung einer in der Umgebung vorhandenen Gaskonzentration, beispielsweise von Ammoniak oder Ethen, wie es etwa im Falle von Lebensmitteltransporten erforderlich sein kann. Der MOX-Sensor 1 wird durch eine elektrische Stromquelle 2 beheizt. Eine Messanordnung 3, 4 dient zur Erfassung und Auswertung einer die Gaskonzentration repräsentierenden elektrischen Ausgangsgröße des Gassensors 1. Diese elektrische Ausgangsgröße kann je nach verwendeter Messart beispielsweise eine Spannungs- oder Strommessung oder die Messung von Widerstand oder Leitfähigkeit am MOX-Sensor 1 sein. Die Messanordnung 3, 4 umfasst einen Messteil 3, welcher bei dem dargestellten Ausführungsbeispiel in einem Sensortreiber 5 zusammen mit der Stromquelle 2 vorgesehen ist und die besagte elektrische Ausgangsgröße des Sensors 1 unmittelbar erfasst, und eine Auswerteschaltung 4, welche mit dem Messteil 3 verbunden ist und beispielsweise durch einen Mikrocontroller oder einen Computer gebildet sein kann. Die in dem Sensortreiber 5 vorgesehene Stromquelle 2 ist so ausgebildet bzw. wird so gesteuert, dass der MOX-Sensor 1 zu diskreten Messzeiten diskontinuierlich beheizt wird. Die Messanordnung 3, 4 ist so ausgebildet, dass allgemein aus der während dieser diskreten Messzeiten erfassten elektrischen Ausgangsgröße des Sensors 1 ein die Gaskonzentration repräsentierender Messwert erzeugt wird.

Fig. 2 zeigt in der oberen, diskontinuierlichen Kurve die Messung einer vorgegebenen Ethen-Konzentration durch diskontinuierliche Messungen zu diskreten Messzeiten, verglichen mit einer kontinuierlichen Messung, wie sie herkömmlich vorgenommen wird und die im unteren Teil des Diagramms dargestellt ist. Wie die Kurve der diskontinuierlichen Messung zeigt, findet zu den Zeiten der diskontinuierlichen Beheizung des MOX-Sensors 1 eine sprunghafte Verminderung des Widerstands des MOX-Sensors 1 statt, welche mehr als zwei Größenordnungen beträgt.

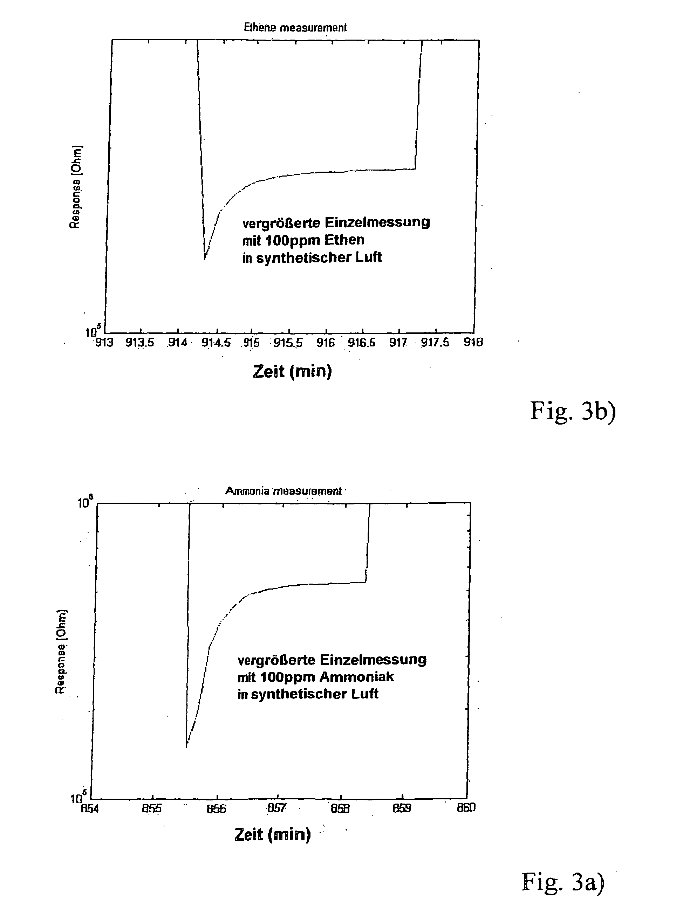

In Fig. 3a) und b) ist in stark vergrößerter Form der in Fig. 2 durch einen Kreis kenntlich gemachte Bereich während der diskontinuierlichen Messung für den Fall einer Ammoniak-Konzentration von 100 ppm in synthetischer Luft bzw. für den Fall einer Ethen-Konzentration von 100 ppm in synthetischer Luft wiedergegeben. Es ist zu sehen, dass an der fallenden Flanke zu Beginn der diskreten Messung zunächst ein Überschwingen der Messkurve in Form eines Peaks stattfindet, welche sich dann auf einen im Wesentlichen konstanten Wert einpendelt. Ein Vergleich der Messkurve für die diskontinuierliche Messung und der Messkurve für die kontinuierliche Messung in Fig. 2 zeigt, dass der eingeschwungene, nahezu konstante Messwert über dem Messwert der kontinuierlichen Messung liegt, also sich der Widerstand nicht vollständig auf den Wert der kontinuierlichen Messung senkt.

Der die Gaskonzentration repräsentierende Messwert wird aus der jeweils während Teilen der diskreten Messzeiten erfassten elektrischen Ausgangsgröße, bei dem hier beschriebenen Ausführungsbeispiel also des Widerstands des MOX-Sensors 1 erzeugt, indem ein Mittelwert dieser Werte gebildet wird.

In den Fig. 4 und 5 sind die diskontinuierlichen Messungen, die daraus erhaltenen Mittelwerte und die herkömmlich bei kontinuierlicher Messung erhaltenen Messwerte dargestellt. Im linken Teil der Figuren sind die Messungen für reine synthetische Luft dargestellt. Im rechten Teil der Figuren sind die Messungen für Konzentrationen von 100 ppm Ammoniak (Fig. 4) bzw. 100 ppm Ethen (Fig. 5) gezeigt. Der Verlauf der Figuren zeigt für beide Fälle ein Absinken des Widerstands um etwa eine Größenordnung für die herkömmliche, kontinuierliche Messung. Wie die eingezeichneten Mittelwerte zeigen, folgen die diskreten Messungen den kontinuierlichen, wenn auch nach oben verschoben, das heißt, auch der Mittelwert der diskreten Messungen zeigt ein ähnliches Absinken um rund eine Größenordnung. Somit ist eine zuverlässige Detektierung der Gaskonzentrationen möglich.

Anstelle des elektrischen Widerstands kann die Leitfähigkeit, die Spannung oder der Strom am MOX-Sensor 1 erfasst werden.

Die Messung erfolgt im Batteriebetrieb mit Batterien geringer Kapazität, was die erfindungsgemäße Einrichtung auf einem RFID-Tag ermöglicht (Radio Frequency Identification). Solche RFID-Tags werden in zunehmendem Maße bei der Warenlogistik, wie beim Lebensmitteltransport oder beim Transport von anderen verderblichen Gütern oder in anderen Bereichen eingesetzt. Dies ist vorteilhaft für alle Zwecke, wo es auf die Überwachung von auch geringen Gaskonzentrationen ankommt.

### Bezugszeichenliste

- 1: MOX-Sensor
- 2: Stromquelle
- 3: Messschaltung
- 4: Mikrocontroller
- 5: Sensortreiber

## Patentansprüche

1. MOX-Gas-Sensor (1) zur Messung einer in der Umgebung vorhandenen Gaskonzentration, mit einer elektrischen Stromquelle (2) zum Beheizen des Gas-Sensors (1) und mit einer Messanordnung (3, 4) zur Erfassung und Auswertung einer die Gaskonzentration repräsentierenden elektrischen Ausgangsgröße des Gas-Sensors (1), wobei der Sensor zum Messen von Ammoniak oder Ethen in der Umgebung des Gas-Sensors (1) vorgesehen ist, **dadurch gekennzeichnet, dass** die elektrische Stromquelle (2) in Form einer Batterie ausgebildet und zum diskontinuierlichen Beheizen des MOX-Sensors (1) zu diskreten Messzeiten vorgesehen ist, dass die Messanordnung (3, 4) zum Erzeugen eines die Gaskonzentration repräsentierenden Messwerts aus der jeweils während der diskreten Messzeiten erfassten elektrischen Ausgangsgröße des Sensors (1) vorgesehen ist, und dass die batteriebetriebene Einrichtung auf einem RFID-Tag ausgebildet ist.

2. Einrichtung nach Anspruch 1, **dadurch gekennzeichnet, dass** die Messanordnung (3, 4) zur Erzeugung eines Mittelwerts aus der jeweils während der diskreten Messzeiten erfassten elektrischen Ausgangsgröße vorgesehen ist.

3. Einrichtung nach Anspruch 1 oder 2, **dadurch gekennzeichnet, dass** die Messanordnung (3, 4) zur Erzeugung des die Gaskonzentration repräsentierenden Messwerts aus der jeweils während Teilen der diskreten Messzeiten erfassten elektrischen Ausgangsgröße des MOX-Sensors (1) vorgesehen ist.

4. Einrichtung nach Anspruch 3, **dadurch gekennzeichnet, dass** die Messanordnung (3, 4) zur Erfassung der elektrischen Ausgangsgröße jeweils während Teilen der diskreten Messzeiten, während denen die elektrische Ausgangsgröße im wesentlichen konstant ist, vorgesehen ist.

5. Einrichtung nach Anspruch 1, 2, 13 oder 4, **dadurch gekennzeichnet, dass** die Messanordnung (3) zur Erfassung von Widerstand oder Leitfähigkeit des MOX-Sensors (1) als elektrische Ausgangsgröße vorgesehen ist.

6. Einrichtung nach Anspruch 1, 2, 3 oder 4, **dadurch gekennzeichnet, dass** die Messanordnung (3) zur Erfassung von Spannung oder Strom am MOX-Sensor (1) als elektrische Ausgangsgröße vorgesehen ist.

## Claims

1. MOX gas sensor (1) for measuring a concentration of gas present in the surroundings, with an electrical power source (2) for heating the gas sensor (1) and with a measuring arrangement (3, 4) for detecting and evaluating an electrical output variable of the gas sensor (1), representing the concentration of gas, the sensor being intended for measuring ammonia or ethylene in the surroundings of the gas sensor (1), **characterized in that** the electrical power source (2) takes the form of a battery and is intended for discontinuously heating the MOX sensor (1) at discrete measuring times, **in that** the measuring arrangement (3, 4) is intended for producing a measured value, representing the concentration of gas, from the electrical output variable of the sensor (1) respectively detected during the discrete measuring times, and **in that** the battery-operated device is formed on an RFID tag.

2. Device according to Claim 1, **characterized in that** the measuring arrangement (3, 4) is intended for producing a mean value from the electrical output variable respectively detected during the discrete measuring times.

3. Device according to Claim 1 or 2, **characterized in that** the measuring arrangement (3, 4) is intended for producing the measured value, representing the concentration of gas, from the electrical output variable of the MOX sensor (1) respectively detected during parts of the discrete measuring times.

4. Device according to Claim 3, **characterized in that** the measuring arrangement (3, 4) is intended for detecting the electrical output variable respectively during parts of the discrete measuring times during which the electrical output variable is substantially constant.

5. Device according to Claim 1, 2, 3 or 4, **characterized in that** the measuring arrangement (3) is intended for detecting resistance or conductivity of the MOX sensor (1) as the electrical output variable.

6. Device according to Claim 1, 2, 3 or 4, **characterized in that** the measuring arrangement (3) is intended for detecting voltage or current at the MOX sensor (1) as the electrical output variable.

## Revendications

1. Détecteur de gaz MOX (1) pour mesurer la concentration d'un gaz présent dans l'environnement, comprenant une source de courant électrique (2) pour chauffer le détecteur de gaz (1) et comprenant un arrangement de mesure (3, 4) pour détecter et interpréter une grandeur électrique de sortie du détecteur de gaz (1) qui représente la concentration de gaz, le détecteur étant prévu pour mesurer de l'ammoniac ou des éthylènes dans l'environnement du détecteur de gaz (1), **caractérisé en ce que** la source de courant électrique (2) est réalisée sous la forme d'une pile et elle est prévue pour le chauffage discontinu du détecteur MOX (1) à des temps de mesure discrets, **en ce que** l'arrangement de mesure (3, 4) est prévu pour générer une valeur mesurée représentant la concentration de gaz à partir de la grandeur électrique de sortie du détecteur (1) détectée respectivement pendant les temps de mesure discrets, et **en ce que** le dispositif fonctionnant sur pile est formé sur une étiquette RFID.

2. Dispositif selon la revendication 1, **caractérisé en ce que** l'arrangement de mesure (3, 4) est prévu pour générer une valeur moyenne à partir de la grandeur électrique de sortie détectée respectivement pendant les temps de mesure discrets.

3. Dispositif selon la revendication 1 ou 2, **caractérisé en ce que** l'arrangement de mesure (3, 4) est prévu pour générer la valeur mesurée qui représente la concentration de gaz à partir de la grandeur électrique de sortie du détecteur MOX (1) détectée respectivement pendant des parties des temps de mesure discrets.

4. Dispositif selon la revendication 3, **caractérisé en ce que** l'arrangement de mesure (3, 4) est prévu pour détecter la grandeur électrique de sortie respectivement pendant des parties des temps de mesure discrets pendant lesquelles la grandeur électrique de sortie est pour l'essentiel constante.

5. Dispositif selon la revendication 1, 2, 3 ou 4, **caractérisé en ce que** l'arrangement de mesure (3) est prévu pour détecter la résistance ou la conductivité du détecteur MOX (1) en tant que grandeur électrique de sortie.

6. Dispositif selon la revendication 1, 2, 3 ou 4, **caractérisé en ce que** l'arrangement de mesure (3) est prévu pour détecter la tension ou le courant au niveau du détecteur MOX (1) en tant que grandeur électrique de sortie.
